(19) **Europäisches Patentamt / European Patent Office / Office européen des brevets**

(11) **EP 3 591 448 A1**

(12) # EUROPEAN PATENT APPLICATION
published in accordance with Art. 153(4) EPC

(43) Date of publication:
**08.01.2020 Bulletin 2020/02**

(21) Application number: **18764300.2**

(22) Date of filing: **06.03.2018**

(51) Int Cl.:
*G02B 6/36* (2006.01)   *B08B 1/00* (2006.01)

(86) International application number:
**PCT/JP2018/008633**

(87) International publication number:
**WO 2018/164142 (13.09.2018 Gazette 2018/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.03.2017   JP 2017044619**

(71) Applicant: **Fujikura Ltd.**
**Tokyo 135-8512 (JP)**

(72) Inventors:
• **NAKAMA, Akihiro**
**Sakura-shi**
**Chiba 285-8550 (JP)**
• **NAKANE, Junichi**
**Sakura-shi**
**Chiba 285-8550 (JP)**

• **FUJIWARA, Kunihiko**
**Sakura-shi**
**Chiba 285-8550 (JP)**
• **TAKAHASHI, Shigeo**
**Sakura-shi**
**Chiba 285-8550 (JP)**
• **ASADA, Hirotaka**
**Sakura-shi**
**Chiba 285-8550 (JP)**
• **GOTO, Makoto**
**Shizuoka-shi**
**Shizuoka 424-0831 (JP)**
• **SUZUKI, Masayoshi**
**Shizuoka-shi**
**Shizuoka 424-0831 (JP)**

(74) Representative: **Osha Liang**
**2, rue de la Paix**
**75002 Paris (FR)**

(54) **CLEANING TOOL AND ADHESIVE BODY**

(57)    [Problem] To allow a cleaning member to be fully in contact with a portion where an optical signal enters and is emitted.

[Solution] This disclosure is a cleaning tool for cleaning an optical connector, the cleaning tool includes an adhesive part to be in contact with an optical signal region where an optical signal enters and is emitted in the optical connector. The adhesive body includes a protrusion protruding in a region to be in contact with the optical signal region.

FIG. 3A

31(30)        12A        12(11)

33

35A    35B        24

35        25

FIG. 3B

**Description**

Technical Field

The present invention relates to a cleaning tool and an adhesive body.

Background Art

Dust or the like adhering to an endface of an optical connector causes an increase in loss of optical signals and the like. To avoid this, cleaning of the endface of the optical connector is needed. Patent Literature 1 describes a cleaning tool that includes a pad-shaped cleaning member having an abutting surface to abut on a joint endface of an optical connector and that is self-adhesive at the abutting surface. Patent Literature 2 describes an adhesive agent to be used for an optical connector cleaner for cleaning a connecting endface of an optical connector.

Citation List

Patent Literature

Patent Literature 1: JP 2002-219421A
Patent Literature 2: JP 2008-180799A

Summary of Invention

Technical Problem

In a case of cleaning an endface of an optical connector, it is important to remove dust adhering to a portion where an optical signal enters and is emitted in the endface of the optical connector. Hence, when a pad-shaped adhesive cleaning member is to abut on the endface of the optical connector, the cleaning member needs to fully abut on the portion where an optical signal enters and is emitted in the endface of the optical connector. However, in the case of the cleaning tool described in Patent Literature 1, an abutting surface of the cleaning member is flat in shape, and therefore it is difficult to cause the cleaning member to fully abut on the portion where an optical signal enters and is emitted, in the endface of the optical connector. This consequently causes problems that the contact between the optical connector and the cleaning member is insufficient, that the cleaning member needs to be pressed against the optical connector with high pressure, and the like.

An objective of some embodiments of the present invention is to allow a cleaning member to be fully in contact with a portion where an optical signal enters and is emitted.

Solution to Problem

Some embodiments of the present invention are a cleaning tool for cleaning an optical connector, the cleaning tool comprising an adhesive part to be in contact with an optical signal region where an optical signal enters and is emitted in the optical connector, wherein the adhesive body includes a protrusion protruding in a region to be in contact with the optical signal region.

Other features of the present invention are made clear by the following description and the drawings.

Advantageous Effects of Invention

According to some embodiments of the present invention, it is possible to cause a cleaning member to be fully in contact with a portion where an optical signal enters and is emitted.

Brief Description of Drawings

[Fig. 1] Fig. 1A and Fig. 1B are explanatory diagrams illustrating a cleaning tool 30 according to the present embodiment.
[Fig. 2] Fig. 2 is a cut perspective view of a ferrule 12 according to a first embodiment.
[Fig. 3] Fig. 3A and Fig. 3B are explanatory diagrams illustrating a cleaning member 31 according to the first embodiment.
[Fig. 4] Fig. 4A is an explanatory diagram illustrating an adhesive body 35 according to a first modified example. Fig. 4B is an explanatory diagram illustrating an adhesive body 35 according to a second modified example. Fig. 4C is an explanatory diagram illustrating an adhesive body 35 according to a third modified example. Fig. 4D is an explanatory diagram illustrating an adhesive body 35 according to a fourth modified example.
[Fig. 5] Fig. 5 is a flowchart of a method for manufacturing the cleaning member 31.
[Fig. 6] Fig. 6 is a flowchart of another method for manufacturing the cleaning member 31.
[Fig. 7] Fig. 7A and Fig. 7B are explanatory diagrams illustrating a cleaning target according to a second embodiment. Fig. 7A is an explanatory diagram illustrating a vicinity of an optical signal region according to the second embodiment. Fig. 7B is a perspective view of a ferrule 12 according to the second embodiment.
[Fig. 8] Fig. 8A and Fig. 8B are explanatory diagrams illustrating the ferrule 12 according to the second embodiment at the time of cleaning.
[Fig. 9] Fig. 9A and Fig. 9B are explanatory diagrams illustrating a cleaning tool 30 according to a third embodiment.
[Fig. 10] Fig. 10A and Fig. 10B are explanatory diagrams illustrating a cleaning member 31 according to a comparative example.

Description of Embodiments

At least the following matters are made clear from the following description and the drawings.

A cleaning tool for cleaning an optical connector, the cleaning tool comprising an adhesive part to be in contact with an optical signal region where an optical signal enters and is emitted in the optical connector, wherein the adhesive body includes a protrusion protruding in a region to be in contact with the optical signal region. According to such a cleaning tool, it is possible to allow the cleaning member to be fully in contact with the portion where an optical signal enters and is emitted.

The adhesive body preferably includes a plurality of the protrusions to be in contact with a plurality of the optical signal regions. With this, each protrusion comes into contact with a corresponding optical signal region, which makes it easier for the protrusion to be in contact with the optical signal region.

The protrusion is preferably formed linearly, and the protrusion is preferably formed to be in contact with a plurality of the optical signal regions. With this, it is possible to simplify the shape of the protrusion.

A recess is preferably formed in an endface of the optical connector. Including the protrusion is particularly effective in such a case.

Preferably B > A where A is a length between the endface and the optical signal region, and B is a protruding amount of the protrusion. This makes it easier for the protrusion to be in contact with the optical signal region, and consequently makes it easier for the adhesive body and the optical signal region to be fully in contact with each other.

A lens part serving as the optical signal region is preferably formed in a bottom portion of the recess. Including the protrusion is particularly effective in such a case.

The adhesive body preferably includes a base part, and the protrusion is preferably formed to protrude from the base part. With this, it is possible to allow the cleaning member to be fully in contact with the portion where an optical signal enters and is emitted.

Preferably B + C > A where A is a length between an endface of the optical connector and the optical signal region, B is a protruding amount of the protrusion, and C is a thickness of the base part. This makes it easier for the protrusion to be in contact with the optical signal region, and consequently makes it easier for the adhesive body and the optical signal region to be fully in contact with each other.

The cleaning tool preferably comprising an alignment part for aligning a position of the protrusion with the optical signal region of the optical connector. With this, it is possible to allow the protrusion to be surely in contact with the optical region.

An adhesive body to be in contact with an optical signal region where an optical signal enters and is emitted in an optical connector will become clear, the adhesive body comprising a protrusion protruding in a region to be in contact with the optical signal region of the optical connector. With such an adhesive body, it is possible to be fully in contact with the portion where an optical signal enters and is emitted.

The adhesive body preferably comprising a plurality of the protrusions to be in contact with a plurality of the optical signal regions. With this, each protrusion comes into contact with a corresponding optical signal region, which makes it easier for the protrusion to be in contact with the optical signal region.

The protrusion is preferably formed linearly, and the protrusion is preferably formed to be in contact with a plurality of the optical signal regions. With this, it is possible to simplify the shape of the protrusion.

The adhesive body preferably includes a base part, and the protrusion is preferably formed to protrude from the base part. With this, it is possible to be fully in contact with the portion where an optical signal enters and is emitted.

{First Embodiment}

Overview:

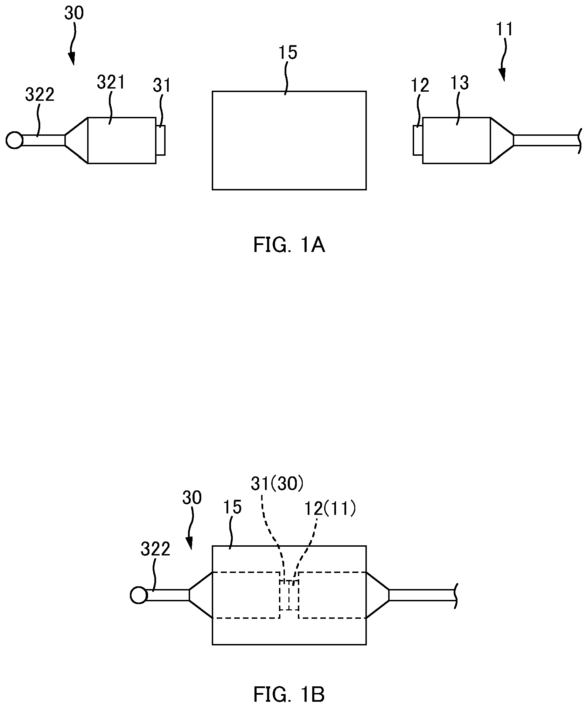

Fig. 1A and Fig. 1B are explanatory diagrams illustrating a cleaning tool 30 according to the present embodiment. An optical connector 11, an adapter 15, and a cleaning tool 30 are included in the drawings.

The optical connector 11 is provided to an end portion of each optical fiber and is a connecting component for optically connecting optical fibers to each other. The optical connector 11 is, for example, an MPO optical connector (F13 type multicore optical fiber connector according to JIS C 5982). The optical connector 11 includes a ferrule 12 and a housing 13. The ferrule 12 is a member that holds end portions of the optical fibers. A structure of the ferrule 12 of the present embodiment is to be described later. The housing 13 is a member that holds the ferrule 12. The housing 13 is formed to be able to be coupled with the adapter 15.

The adapter 15 is a component for connecting optical connectors 11 to each other. A connector insertion opening (not illustrated) is formed at each of both ends of the adapter 15. When the optical connectors 11 are inserted into the respective connector insertion openings, the ferrules 12 of the optical connectors 11 abut on each other to optically connect the optical connectors 11 to each other (to optically connect the optical fibers of the optical connectors 11 to each other). In the present embodiment, the cleaning tool 30 is inserted into one of the connector insertion openings of the adapter 15 (refer to Fig. 1A and Fig. 1B), to clean a connection surface of the ferrule 12 of the optical connector 11 inserted into the other connector insertion opening.

The cleaning tool 30 is a tool for cleaning the connection surface (optical signal surface) of the ferrule 12. The cleaning tool 30 includes a cleaning member 31, a connector part 321, and an operation part 322.

The cleaning member 31 is a member for cleaning the connection surface (optical signal surface) of the ferrule 12. In the present embodiment, an adhesive body 35 (to be described later) is provided to an endface of the cleaning member 31. The adhesive body 35 is brought into contact with the connection surface of the ferrule 12 to cause dust on the connection surface of the ferrule 12 to adhere to the adhesive body 35. In this way, the dust is removed.

The connector part 321 is a part to couple the cleaning tool 30 with the adapter 15. When the cleaning tool 30 is inserted into the adapter 15, the connector part 321 engages with the adapter 15 to thereby couple the cleaning tool 30 with the adapter 15. To enable this, the connector part 321 has substantially the same shape as that of the housing 13 of the optical connector 11. With the cleaning tool 30 including the connector part 321, it makes it easy to align the cleaning member 31 with the optical connector 11. Note that, however, the cleaning tool 30 may not necessarily include the connector part 321.

The operation part 322 is a part for an operator to operate (hold) the cleaning tool 30. Note that, however, the cleaning tool 30 may not necessarily include the operation part 322.

Structure of Cleaning Target:

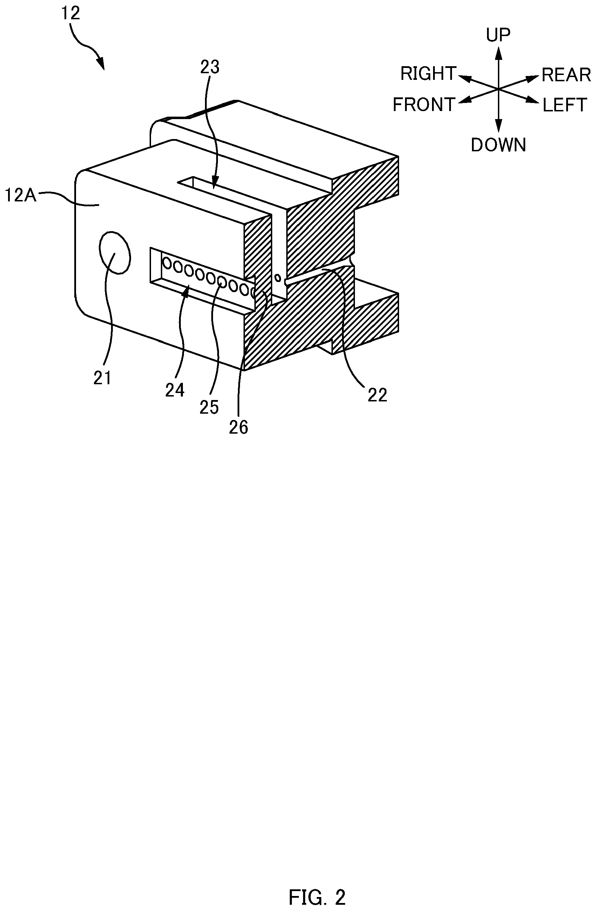

Before a detailed description of the cleaning member 31 of the cleaning tool 30, a structure of the ferrule 12 of the optical connector 11 to be a cleaning target will be described first. Fig. 2 is a cut perspective view of the ferrule 12 according to a first embodiment.

In the following description about the ferrule 12, directions will be defined as illustrated in the drawings. Specifically, a direction of each fiber hole 22 is defined as a "front-rear direction", a side toward a ferrule 12 to be coupled is defined as "front", and an opposite side is defined as "rear". Further, a direction in which two guide pin holes 21 of the ferrule 12 are aligned is defined as a "left-right direction", a right side when a front side is seen from a rear side is defined as "right", and an opposite side is defined as "left". Further, a direction perpendicular to the front-rear direction and the left-right direction is defined as an "up-down direction", a side with an opening in an adhesive filling part 23 is defined as "up", and an opposite side is defined as "down".

The ferrule 12 is a member that holds end portions of optical fibers for transmitting optical signals. A front endface (ferrule endface 12A) of the ferrule 12 serves as an endface to come into contact with an endface of the ferrule to be coupled (or an inner wall surface of the adapter 15). The ferrule 12 of the present embodiment is integrally molded by resin (e.g., transparent resin) that allows transmission of an optical signal. End portions of the plurality of optical fibers (not illustrated) are held inside this ferrule 12.

The ferrule 12 includes the paired guide pin holes 21, a plurality of fiber holes 22, the adhesive filling part 23, a recess 24, a plurality of lens parts 25, and a light transmission part 26. The paired guide pin holes 21 are formed at an interval in the left-right direction. Since Fig. 2 is a cross-sectional view, only one of the guide pin holes 21 is illustrated in the drawing. The plurality of fiber holes 22 are arranged between the paired guide pin holes 21. The unillustrated optical fibers are inserted into the respective fiber holes 22 and are fixed to the ferrule 12 with an adhesive agent filled into the adhesive filling part 23 in a state where the endfaces of the optical fibers abut a wall surface facing opening surfaces of the fiber holes 22 (front wall surface of inner wall surfaces of the adhesive filling part 23).

The recess 24 is a part recessed from the ferrule endface 12A. The recess 24 is provided between the two guide pin holes 21 in the ferrule endface 12A. The recess 24 has a long narrow rectangular shape in the left-right direction so as to correspond to the plurality of optical fiber holes 22.

The lens parts 25 are provided in a bottom surface of the recess 24. With the lens parts 25 being provided in the bottom surface of the recess 24, when the ferrules 12 come to abut each other (the ferrule endfaces 12A are brought into contact with each other), the lens parts 25 are prevented from coming into contact with each other (the lens parts 25 can be maintained in a non-contacting state). The lens parts 25 are arranged so as to correspond to the plurality of respective optical fibers. An optical signal from each of the optical fibers is input and/or output through the corresponding lens part 25. Hence, a surface of each of the lens parts 25 (lens surface) serves as a region to and/or from which an optical signal inputs and/or outputs (optical signal region). In other words, the surface of the lens part 25 (lens surface) serves as a region through which an optical signal passes. The lens part 25 is formed so as to function, for example, as a collimating lens. By inputting and/or outputting an optical signal having a diameter magnified by the lens part 25, influence of misalignment of an optical path and the like can be reduced, and consequently a transmission loss of an optical signal can be suppressed.

The light transmission part 26 is a part that allows optical signals to be transmitted between the endfaces of the optical fibers (not illustrated) and the lens parts 25. Hence, the light transmission part 26 is a part serving as optical paths of the optical signals. Note that, although the ferrule 12 is integrally molded by transparent resin in the present embodiment, components and materials forming the ferrule 12 are not limited to transparent resin as long as at least the lens parts 25 and the light transmission part 26 can transmit optical signals.

Structure of Cleaning Member 31:

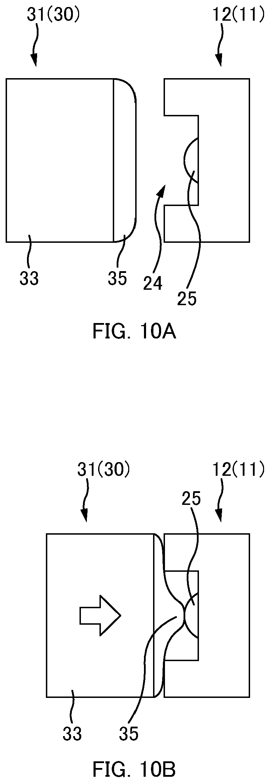

Before a description of the cleaning tool 31 according to the present embodiment, a cleaning member 31 according to a comparative example will be described first. Fig. 10A and Fig. 10B are explanatory diagrams illustrating the cleaning member 31 according to the comparative example.

In the cleaning member 31 of the comparative example, an adhesive body 35 having a flat surface is formed by applying an adhesive agent to a base 33. In the comparative example, since a surface of the adhesive body 35 is flat, this makes it difficult for the adhesive body 35 to be fully in contact with the lens parts 25 (specifically, the surfaces of the lens parts 25) each serving as a region where an optical signal enters and is emitted (optical signal region) . In particular, in a state where the recess 24 is formed in the ferrule endface 12A and the surfaces of the lens parts 25 (optical signal regions) are placed in the recess 24 as in the ferrule 12 of the present embodiment, it is difficult for the lens parts 25 to be fully in contact with the adhesive body 35 when the surface of the adhesive body 35 is flat as in the comparative example. Consequently, the contact between the lens parts 25 and the adhesive body 35 may be insufficient (the area of the contact may be insufficient, or force applied for the contact may be insufficient), which may result in insufficient removal of dust adhering to the lens parts 25. Moreover, for the lens parts 25 and the adhesive body 35 to be fully in contact with each other, the cleaning member 31 needs to be pressed against the ferrule 12 with a high pressure. Additionally, such an increase in pressure to be applied to press the cleaning member 31 against the ferrule 12 causes damaging of the adhesive body 35 at the time of cleaning to progress, which reduces the number of times the cleaning member 31 can be used (number of times the cleaning member 31 can be repeatedly used).

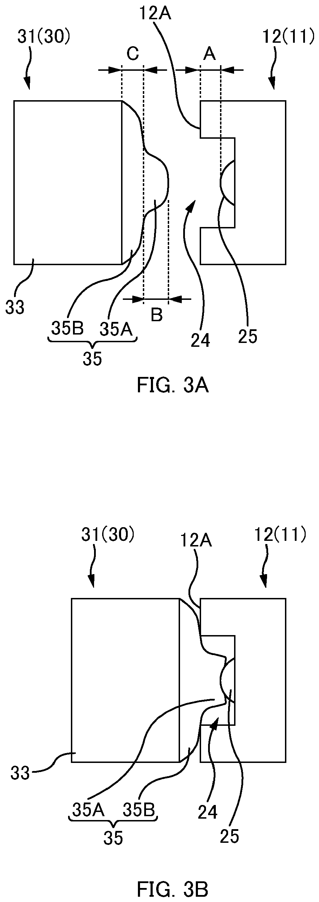

Fig. 3A and Fig. 3B are explanatory diagrams illustrating the cleaning member 31 according to the first embodiment.

The cleaning member 31 includes the base 33 and the adhesive body 35. The base 33 is a member that holds the adhesive body 35.

The base 33 with an adhesive agent enables the flexible adhesive body 35 to be pressed against the ferrule 12. An endface of the base 33 is formed to be larger than the regions where optical signals enter and are emitted (optical signal regions) . Here, the endface of the base 33 is formed larger than a region in which the plurality of lens parts 25 are formed and is also formed larger than the recess 24 of the ferrule 12.

The adhesive body 35 is a member for causing dust to adhere, and is an adhesive member. The adhesive body 35 is a member to be brought into contact with the regions where optical signals of the optical connector enter and are emitted (optical signal regions) . The adhesive body 35 can be used, not only for the cleaning tool 30 of the present embodiment, but also for another member to be used for causing dust to adhere. The adhesive body 35 has such a degree of adhesiveness that, when the adhesive body 35 is brought into contact with and then removed from the ferrule endface 12A, any part of the adhesive body 35 would not remain on the ferrule endface 12A. The adhesive agent to be used for the adhesive body 35 is desired to have removability, and not to be ruptured or the like even if the connector endface is uneven, and at the same time not to remain after being removed, not to come off or have any bubbles in a heat shock test or the like, and to have elastic deformability to be able to fit the uneven surface and restorability against stress. Examples of a constituent of an adhesive agent having such properties include acrylic resin, a rubber-based material represented by butyl rubber, isoprene rubber, styrene-butadiene rubber, and the like, polyvinyl ether resin, silicone resin, and urethane rubber, and any of the above can be selected for use. Acrylic adhesive is most preferable.

The adhesive body according to the present embodiment at least has properties that are capable of compressive deformation, extension deformation, and shear deformation by elastic deformation.

The adhesive body 35 according to the present embodiment preferably has a storage elastic modulus in the range from $1.0 * 10^4$ Pa to $1.0 * 10^6$ Pa. With the storage elastic modulus of the adhesive body 35 being within the above range, this exerts effects of making it easier for the abutting surface of the adhesive body 35 to be fully in contact with the portions where optical signals enter and are emitted, which enables suitable collection of dust. The storage elastic modulus (Pa) indicates a measurement result at 20°C when the measurement was performed under the following conditions.

Measuring device: MARS I (manufactured by Haake Technik), probe diameter: 8 mm$\varphi$, sample thickness: 4 mm, load: 5 N, frequency: 1 Hz, rate of temperature increase: 10°C/min

The adhesive body 35 according to the present embodiment preferably has peeling force of 0.1 to 10 N / 20 mm. With the peeling force being within the above range, restorability against stress can be applied and suitable degrees of adhesive strength and peeling force can be maintained, when the adhesive body 35 of the cleaning tool 30 of the present embodiment is pressed against the portions where optical signals enter and are emitted to be elastically deformed. Hence, with the adhesive body 35 according to the present embodiment, it is possible to have a high performance of dust removal, to have little adhesive remained, and to perform sufficient cleaning. When the peeling force is lower than 0.1 N / 20 mm, it may be more likely to have a reduction in performance of dust removal, for the adhesive body to rupture, and for adhesive to remain. When the peeling force exceeds 10 N / 20 mm, it may be more likely for adhesive to remain.

Note that in the present description, peeling force refers to a value obtained by measuring, using a method conforming to JIS Z 2037: 2009, a sample of an adhesive body having a size of 20 mm * 90 mm and a thickness of 4 mm and stacked with a PET film.

As illustrated in Fig. 3A, the adhesive body 35 of the present embodiment includes a protrusion 35A protruding in a region coming into contact with each of the lens parts 25. With this, as illustrated in Fig. 3B, the protrusion 35A is easier to come into contact with the corresponding lens part 25, and consequently the adhesive body 35 having adhesiveness can be fully in contact with the lens part 25. In other words, according to the present embodiment, a sufficient contact area can be secured, and the adhesive body 35 can be in contact with the lens parts 25 (optical signal regions) with sufficient force. Hence, according to the present embodiment, the lens parts 25 and the adhesive body 35 can be fully in contact with each other, which consequently makes it easier to remove dust adhering to the lens parts 25. Moreover, according to the present embodiment, even when the pressure to be applied to press the cleaning member 31 against the ferrule 12 is reduced, the adhesive body 35 can be in contact with the lens parts 25 (optical signal regions) with sufficient force at the protrusion 35A, which facilitates cleaning operation. Additionally, since the pressure to be applied to press the cleaning member 31 against the ferrule 12 may be low, damage to the adhesive body 35 at the time of cleaning can be reduced, which can increase the number of times the cleaning member 31 can be used (number of times the cleaning member 31 can be repeatedly used).

In a case of including the plurality of lens parts 25 (optical signal regions), the adhesive body 35 desirably includes a plurality of protrusions 35A so that the protrusions 35A correspond to the respective lens parts 25. For example, in a case that the plurality of lens parts 25 are included as illustrated in Fig. 2, the adhesive body 35 preferably includes the plurality of protrusions 35A arranged to align in the left-right direction. With this, each of the protrusions 35A comes into contact with a corresponding one of the lens parts 25, which makes easier for the protrusions 35A to be in contact with the lens parts 25.

Alternatively, a single protrusion 35A may be formed as a ridge (streak) to be in contact with the plurality of lens parts 25 (optical signal regions) . For example, in a case that the plurality of lens parts 25 are formed in a row in the left-right direction as illustrated in Fig. 2, the adhesive body 35 may include the protrusion 35A (ridge) linearly protruding in the left-right direction. The protrusion 35A can also be in contact with each of all the lens parts 25 in this configuration. Forming the protrusion as a ridge can simplify the shape of the protrusion.

Since the protrusion(s) 35A of the adhesive body 35 of the present embodiment protrudes in a region to be in contact with the lens parts 25, the lens parts 25 can be fully in contact with the adhesive body 35 even in a state where the lens parts 25 (optical signal regions) are arranged in the recess 24. As described above, the cleaning tool 30 including the adhesive body 35 with the protrusion(s) 35A is particularly effective when the recess 24 is formed in the endface of the optical connector 11 (note that, however, the optical connector 11 to be a cleaning target is not limited to an optical connector including the recess 24 in the endface, as will be described later).

Assume, as illustrated in Fig. 3A, that the front-rear direction length between the ferrule endface 12A and the lens part 25 (optical signal region) is A and the protruding amount of the protrusion 35A is B, the protruding amount B is desirably greater than A (B > A). This makes it easier for the protrusion 35A to come into contact with the lens part 25, which consequently makes it easier for the adhesive body 35 to be fully in contact with the lens parts 25.

In a case, as illustrated in Fig. 3A, that the adhesive body 35 includes a base part 35B and the protrusion 35A are formed to protrude from the base part 35B, the protrusion 35A can be in contact with the lens part 25 with the base part 35B being deformed at the time of cleaning even if the protruding amount B from the base part 35B is smaller than A. In this case, assuming that the thickness of the base part 35B is C, the thickness B + C of the adhesive body 35 including the base part 35B at the protrusion 35A is desirably greater than A (B + C > A). With this, the base part 35B is deformed at the time of cleaning to thereby allow the protrusion 35A to come into contact with the lens part 25, which consequently allows the adhesive body 35 to be fully in contact with the lens part 25.

As illustrated in Fig. 3B, the protrusion 35A of the adhesive body 35 has bendability (preferable elastic deformation properties), and hence, even when the optical signal region (region where an optical signal enters and is emitted) has a curved surface as a lens surface of the lens part 25, the protrusion 35A can have an intimate contact with the curved surface. Hence, according to the present embodiment, it is possible to remove dust adhering to a curved surface as the lens surface of the lens part 25.

Moreover, as illustrated in Fig. 1A, the cleaning tool 30 according to the present embodiment includes the connector part 321 for aligning the cleaning member 31 with the optical connector 11. The cleaning tool 30 including the connector part 321 enables alignment of the lens parts 25 (optical signal regions) of the optical connector 11 with the protrusion(s) 35A, which makes it possible for the protrusion (s) 35A to be surely in contact with the lens parts 25 (optical signal regions). Accordingly, the connector part 321 corresponds to an alignment part for aligning the position (s) of the protrusion (s) 35A with the optical signal regions of the optical connector 11. Note that the alignment part for aligning the position(s) of the protrusion(s) 35A with the optical signal regions of the optical connector 11 is not limited to the connector part 321. The alignment part of the cleaning tool 30 may be formed to directly align the optical connector 11 and the cleaning member 31 (or the protrusion(s) 35A) without using the adapter 15. For example, the cleaning tool 30 may include alignment pins (alignment part) . The alignment pins may be fitted to the guide pin holes 21 of the ferrule 12 to directly align the optical connector 11 and the cleaning member 31 (or the protrusion(s) 35A).

Modified Examples:

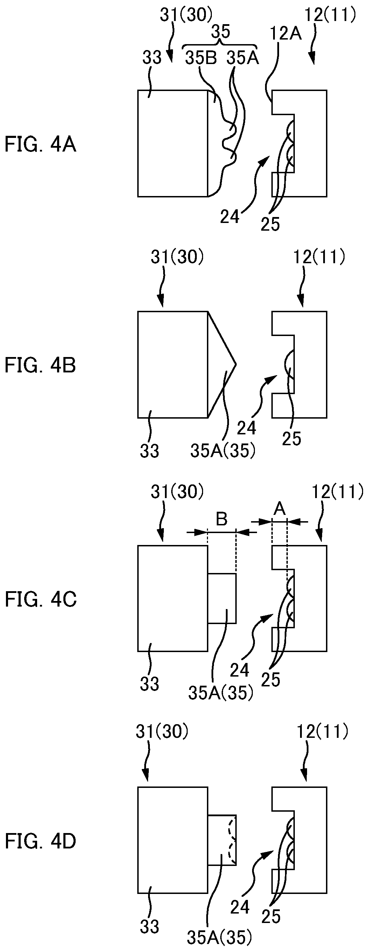

Fig. 4A is an explanatory diagram of an adhesive body 35 according to a first modified example. A ferrule 12 of the first modified example to be a cleaning target includes two lens parts 25 arranged side by side in an up-down direction. In such a case of including the plurality of lens parts 25 (optical signal regions) in the up-down direction, the adhesive body 35 may include a plurality of protrusions 35A aligned in the up-down direction so that the protrusions 35A correspond to the respective lens parts 25. Each of the protrusions 35A in Fig. 4A may be a protrusion 35A (ridge) protruding linearly in the left-right direction (direction perpendicular to the sheet in Fig. 4A). Also in the first modified example, since the adhesive body 35 includes the protrusions 35A each protruding in a region to be in contact with the corresponding lens part 25, this makes easier for the protrusion 35A to come into contact with the lens part 25, and consequently the adhesive body 35 having adhesiveness can be fully in contact with the lens parts 25.

Fig. 4B is an explanatory diagram of an adhesive body 35 according to a second modified example. In the second modified example, the adhesive body 35 does not include any base part 35B or has no boundary between a base part 35B and a protrusion 35A. However, also in the second modified example, since the adhesive body 35 includes the protrusion 35A protruding in a region to be in contact with the lens part 25, this makes it easier for the protrusion 35A to come into contact with the lens part 25, and consequently the adhesive body 35 having adhesiveness can be fully in contact with the lens parts 25.

Fig. 4C is an explanatory diagram illustrating an adhesive body 35 according to a third modified example. In the third modified example, the adhesive body 35 does not include any base part 35B. Moreover, in the third modified example, an endface of a protrusion 35A is formed to be flat instead of being convex. Also in the third modified example, since the adhesive body 35 includes the protrusion 35A protruding in a region to be in contact with lens parts 25, this makes it easier for the protrusion 35A to come into contact with the lens parts 25, and consequently the adhesive body 35 having adhesiveness can be fully in contact with the lens parts 25. Note that, also in the third modified example, assuming that the front-rear direction length between the ferrule endface 12A and the lens part 25 (optical signal region) is A and the protruding amount of the protrusion 35A is B, the protruding amount B is desirably greater than A (B > A).

Fig. 4D is an explanatory diagram illustrating an adhesive body 35 according to a fourth modified example. In the fourth modified example, compared with the third modified example, recesses (recessed portions) along curved surfaces of lens parts 25 are formed in an endface of a protrusion 35A. Also in the fourth modified example as described above, since the adhesive body 35 includes the protrusion 35A protruding in a region to be in contact with the lens parts 25, this makes it easier for the protrusion 35A to come into contact with the lens parts 25, and consequently the adhesive body 35 having adhesiveness can be fully in contact with the lens parts 25.

Regarding Manufacturing Method:

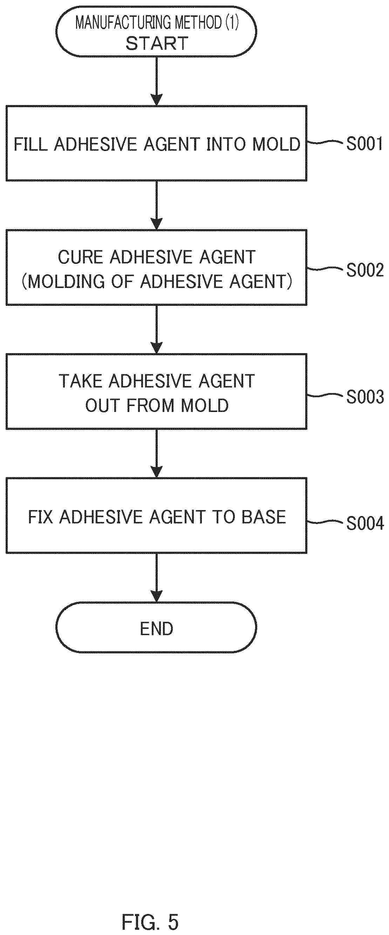

Fig. 5 is a flowchart of a method for manufacturing the cleaning member 31. First, an adhesive agent is filled into a mold (S001) and is cured (S002), to mold the adhesive body 35. Thereafter, the adhesive body 35 is taken out from the mold (S003) and is then fixed to the base 33 (S004). Here, the adhesive body 35 is adhesion-fixed to the base 33 with the adhesive agent. However, the method of fixing the adhesive body 35 to the base 33 is not limited to adhesion fixing.

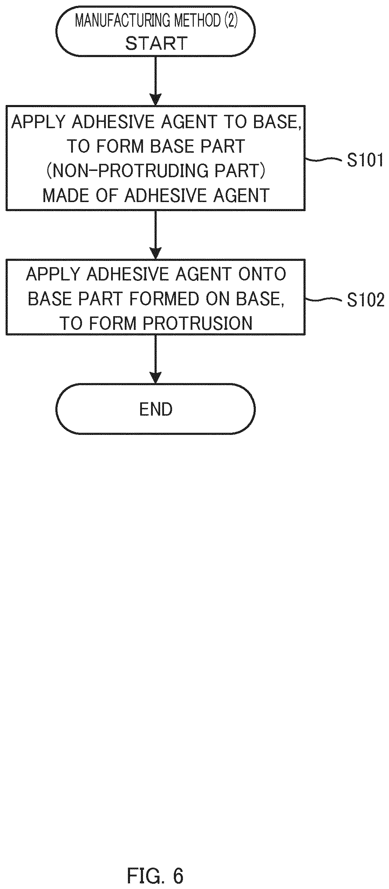

Fig. 6 is a flowchart of another method for manufacturing the cleaning member 31. First, an adhesive agent is applied to the base 33 to form the base part 35B of the adhesive body 35 (S101) . Next, an adhesive agent is further applied onto the base part 35B formed on the base 33, to form the protrusion (s) 35A (S102) . Note that if the adhesive agent needs to be cured, the base part 35B and the protrusion (s) 35A may be cured separately by performing a step of curing the adhesive agent after each of steps S101 and S102, or the base part 35B and the protrusion (s) 35A may be cured together after step S102. For application of the adhesive agent, for example, a 3D printer may be used, but another application method may be employed.

{Second Embodiment}

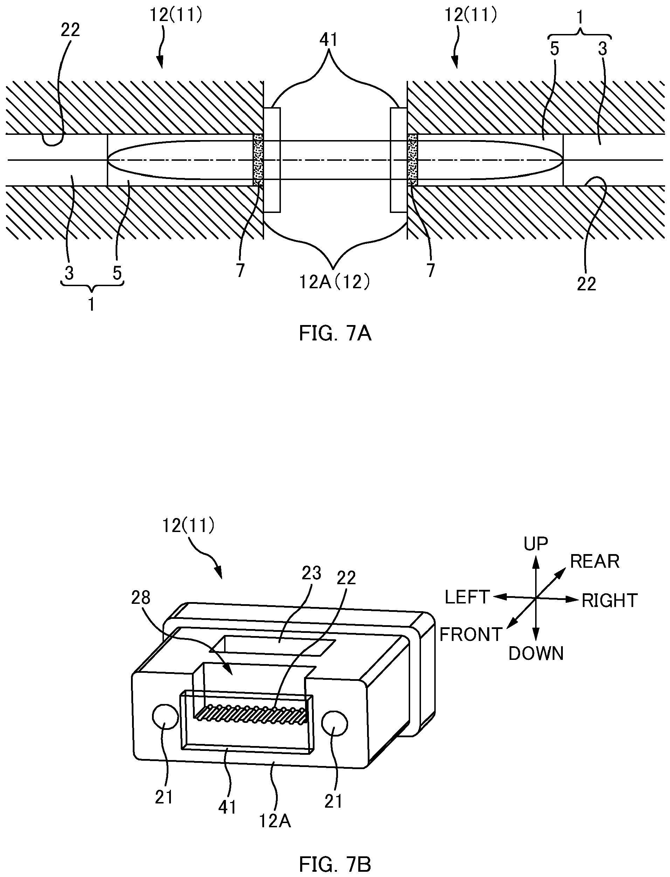

Fig. 7A and Fig. 7B are explanatory diagrams illustrating a cleaning target according to a second embodiment. Fig. 7A is an explanatory diagram illustrating a vicinity of an optical signal region according to the second embodiment. Fig. 7B is a perspective view of a ferrule 12 according to the second embodiment.

To each of fiber holes 22 of the ferrule 12 illustrated in Fig. 7B, a lensed fiber 1 is inserted as illustrated in Fig. 7A. The lensed fiber 1 is an optical fiber formed by fusion-splicing a GRIN lens 5 to a tip of a single-mode optical fiber 3.

A flat plate 41 capable of transmitting an optical signal is provided to an endface of the ferrule 12. This allows the flat plate 41 to be arranged ahead of the lensed fibers 1 inserted into the respective fiber holes 22 of the ferrule 12. The flat plate 41 is provided perpendicularly to an optical axis of the lensed fiber 1. Note that a refractive index matching material 7 is filled (into a space) between the flat plate 41 and an endface of the lensed fiber 1. A matching material filling part 28 for filling the refractive index matching material 7 is provided in the ferrule 12.

Light propagated through the single-mode optical fiber 3 are converted into parallel light by the GRIN lens 5, and the parallel light passing through the refractive index matching material 7 and the flat plate 41 is emitted from an outer surface of the flat plate 41. The parallel light entering a flat plate 41 from an outer surface of the flat plate 41 passes through the flat plate 41 and a refractive index matching material 7 to enter a GRIN lens 5, converges, through the GRIN lens 5, at a single-mode optical fiber 3, and the convergent light propagates the single-mode optical fiber 3. Hence, in the second embodiment, each region through which parallel light passes in the outer surface of the flat plate 41 serves as an optical signal region where an optical signal enters and is emitted.

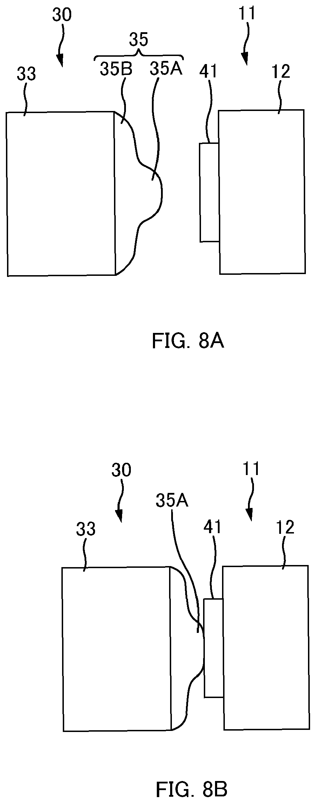

Fig. 8A and Fig. 8B are explanatory diagrams illustrating the ferrule 12 of the second embodiment at the time of cleaning. The cleaning member 31 includes a base 33 and an adhesive body 35 as in the first embodiment. As illustrated in Fig. 8A, the adhesive body 35 includes a protrusion 35A protruding in a region to be in contact with the optical signal region as in the first embodiment.

Also in the second embodiment, a sufficient contact area can be secured, and the adhesive body 35 can be in contact with the optical signal region with sufficient force. Hence, also in the second embodiment, the optical signal region and the adhesive body 35 can be fully in contact with each other, which consequently makes it easier to remove dust adhering to the optical signal region. Moreover, also in the second embodiment, even when the pressure to be applied to press the cleaning member 31 against the ferrule 12 is reduced, the adhesive body 35 can be in contact with the optical signal region with sufficient force at the protrusion 35A, which facilitates cleaning operation. Additionally, since the pressure to be applied to press the cleaning member 31 against the ferrule 12 may be low, damage to the adhesive body 35 at the time of cleaning can be reduced, which can increase the number of times the cleaning member 31 can be used (number of times the cleaning member 31 can be repeatedly used).

Note that, although the recess 24 is formed in the endface of the optical connector 11 to be a cleaning target in the above-described first embodiment, the optical connector 11 to be a cleaning target may not necessarily include the recess 24 in the endface as illustrated in the second embodiment. In the above-described first embodiment, each of the lens parts 25 serves as an optical signal region (region where an optical signal enters and is emitted or a region to be in contact with the protrusion 35A of the adhesive body 35) . However, as illustrated in the second embodiment, the optical signal region may be a flat surface as the outer surface of the flat plate 41 instead of a curved surface as the surface of the lens part 25.

{Third Embodiment}

The cleaning tool 30 according to the above-described embodiments includes the connector part 321 and the operation part 322 as illustrated in Fig. 1A and Fig. 1B. The cleaning tool 30 is inserted into one of the connector insertion openings of the adapter 15 to thereby clean the connection surface of the ferrule 12 of the optical connector 11. However, the cleaning tool 30 is not limited to such a shape and usage.

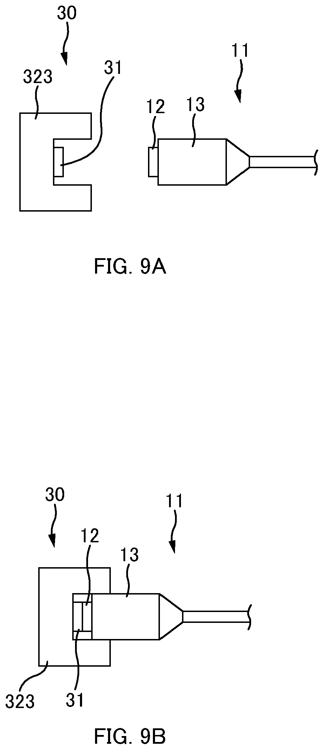

Fig. 9A and Fig. 9B are explanatory diagrams illustrating a cleaning tool 30 according to a third embodiment. The cleaning tool 30 according to the third embodiment is formed as a cap that protects the connection surface of the ferrule 12 of the optical connector 11. The cleaning tool 30 of the third embodiment includes a cleaning member 31 and a cap part 323. The cleaning member 31 is formed similarly to that of the above-described embodiments. The cleaning member 31 includes the above-described adhesive body 35 (not illustrated in Fig. 9A and Fig. 9B), and the adhesive body 35 includes a protrusion 35A (not illustrated in Fig. 9A and Fig. 9B) protruding in a region to be in contact with an optical signal region. The cap part 323 is a part that protects the connection surface of the ferrule 12 of the optical connector 11 and is formed to be detachable from the optical connector 11. In the third embodiment, by attaching the cleaning tool 30 to the optical connector 11 so that the cap part 323 covers the optical connector 11, the connection surface of the ferrule 12 of the optical connector 11 can be protected by the cap part 323. In addition, by the adhesive body 35 coming into contact with the connection surface of the ferrule 12, dust on the connection surface of the ferrule 12 is caused to adhere to the adhesive body 35 to thereby be able to remove the dust.

As illustrated above, the cleaning tool 30 may be formed as a cap and may be formed as another member. Moreover, the adhesive body 35 may be used for other kinds of cleaning tool instead of being used only for the above-described cleaning tool 30. The adhesive body 35 may further be used, without being limited to a cleaning tool, for various purposes as long as the purposes are to be in contact with an optical connector.

{Others}

The foregoing embodiments are for facilitating the understanding of the present invention, and are not to be construed as limiting the present invention. The present invention may be modified and/or improved without departing from the gist thereof, and it goes without saying that the present invention encompasses any equivalents thereof.

Reference Signs List

| | |
|---|---|
| 1: | Lensed fiber; |
| 3: | Single-mode optical fiber; |
| 5: | GRIN lens; |
| 7: | Refractive index matching material; |
| 11: | Optical connector; |
| 12: | Ferrule; |
| 12A: | Ferrule endface; |
| 13: | Housing; |
| 15: | Adapter; |
| 21: | Guide pin hole; |
| 22: | Fiber hole; |
| 23: | Adhesive filling part; |
| 24: | Recess; |
| 25: | Lens part; |
| 26: | Light transmission part; |
| 28: | Matching material filling part; |
| 30: | Cleaning tool; |
| 31: | Cleaning member; |
| 33: | Base; |
| 35: | Adhesive body; |
| 35A: | Protrusion; |
| 35B: | Base part; |
| 321: | Connector part; |
| 322: | Operation part; |
| 41: | Flat plate. |

**Claims**

1. A cleaning tool for cleaning an optical connector, the cleaning tool comprising
an adhesive part to be in contact with an optical signal region where an optical signal enters and is emitted in the optical connector, wherein
the adhesive body includes a protrusion protruding in a region to be in contact with the optical signal region.

2. The cleaning tool according to claim 1, wherein
the adhesive body includes a plurality of the protrusions to be in contact with a plurality of the optical signal regions.

3. The cleaning tool according to claim 1, wherein
the protrusion is formed linearly, and
the protrusion is formed to be in contact with a plurality of the optical signal regions.

4. The cleaning tool according to any one of claims 1 to 3, wherein
a recess is formed in an endface of the optical connector.

5. The cleaning tool according to claim 4, wherein

$$B > A$$

where A is a length between the endface and the optical signal region, and
B is a protruding amount of the protrusion.

6. The cleaning tool according to claim 4 or 5, wherein
a lens part serving as the optical signal region is formed in a bottom portion of the recess.

7. The cleaning tool according to any one of claims 1 to 6, wherein
the adhesive body includes a base part, and
the protrusion is formed to protrude from the base part.

8. The cleaning tool according to claim 7, wherein

$$B + C > A$$

where A is a length between an endface of the optical connector and the optical signal region,
B is a protruding amount of the protrusion, and
C is a thickness of the base part.

9. The cleaning tool according to any one of claims 1 to 8, comprising
an alignment part for aligning a position of the protrusion with the optical signal region of the optical connector.

10. An adhesive body to be in contact with an optical signal region where an optical signal enters and is emitted in an optical connector, the adhesive body comprising
a protrusion protruding in a region to be in contact with the optical signal region of the optical connector.

11. The adhesive body according to claim 10, the adhesive body comprising
a plurality of the protrusions to be in contact with a plurality of the optical signal regions.

12. The adhesive body according to claim 10, wherein
the protrusion is formed linearly, and
the protrusion is formed to be in contact with a plurality of the optical signal regions.

13. The adhesive body according to any one of claims 10 to 12, wherein
the adhesive body includes a base part, and
the protrusion is formed to protrude from the base part.

FIG. 1A

FIG. 1B

FIG. 2

**FIG. 3A**

**FIG. 3B**

FIG. 4A

31(30)
35
33  35B  35A  12A  12(11)
24
25

FIG. 4B

31(30)  12(11)
33  35A(35)  24  25

FIG. 4C

31(30)  B  A  12(11)
33  35A(35)  24  25

FIG. 4D

31(30)  12(11)
33  35A(35)  24  25

MANUFACTURING METHOD (1)
START

FILL ADHESIVE AGENT INTO MOLD ——— S001

CURE ADHESIVE AGENT
(MOLDING OF ADHESIVE AGENT) ——— S002

TAKE ADHESIVE AGENT
OUT FROM MOLD ——— S003

FIX ADHESIVE AGENT TO BASE ——— S004

END

FIG. 5

MANUFACTURING METHOD (2)
START

APPLY ADHESIVE AGENT TO BASE,
TO FORM BASE PART
(NON-PROTRUDING PART)
MADE OF ADHESIVE AGENT — S101

APPLY ADHESIVE AGENT ONTO
BASE PART FORMED ON BASE,
TO FORM PROTRUSION — S102

END

FIG. 6

FIG. 7A

FIG. 7B

FIG. 8A

FIG. 8B

FIG. 9A

FIG. 9B

31(30)　　　　　　　　　12(11)

33　　35　24　　25

FIG. 10A

31(30)　　25　　12(11)

33　　35

FIG. 10B

## INTERNATIONAL SEARCH REPORT

| International application No. |
|---|
| PCT/JP2018/008633 |

| A. CLASSIFICATION OF SUBJECT MATTER |
|---|
| Int.Cl. G02B6/36(2006.01)i, B08B1/00(2006.01)i |

According to International Patent Classification (IPC) or to both national classification and IPC

| B. FIELDS SEARCHED |
|---|
| Minimum documentation searched (classification system followed by classification symbols) |
| Int.Cl. G02B6/36, B08B1/00 |

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| Y | US 2002/0006261 A1 (KROW, JR. et al.) 17 January 2002, paragraphs [0023], [0026], fig. 2-4 & US 6374030 B2 | 1-13 |
| Y | JP 2000-81538 A (PENTEL CO., LTD.) 21 March 2000, paragraphs [0010], [0014], fig. 1, 2, 6 (Family: none) | 1-13 |
| Y | JP 2013-68820 A (FUJIKURA LTD.) 18 April 2013, paragraphs [0049]-[0055], fig. 8, 9, 11 & JP 6023412 B2 | 1-13 |

☒ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11.05.2018 | 22.05.2018 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2018/008633 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 2008-180799 A (TOMOEGAWA CO., LTD.) 07 August 2008, paragraphs [0009]-[0013], fig. 1, 2 (Family: none) | 1-13 |
| A | JP 2011-22505 A (FUJIKURA LTD.) 03 February 2011, paragraphs [0028]-[0031], fig. 6, 7 & JP 5412200 B2 | 1-13 |
| A | US 2004/0088813 A1 (COX, L. R.) 13 May 2004, paragraphs [0019]-[0023], fig. 1-6 & WO 2004/043619 A1 & EP 1558406 A1 | 1-13 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002219421 A

- JP 2008180799 A